# EUROPÄISCHE PATENTANMELDUNG

(11) **EP 4 715 228 A1**
(43) Veröffentlichungstag der Anmeldung: **25.03.2026**
(21) Anmeldenummer: 24201960.2
(22) Anmeldetag: 23.09.2024
(51) Int. Cl.: F16B 7/04, F16M 11/04, F16B 2/12, F16C 17/04, F16M 11/14, F16M 11/20, F16M 13/02

(54) **STANGENVERBINDEREINRICHTUNG ZUM VARIABLEN WINKELSTABILEN VERBINDEN VON ZWEI STANGEN ZUM WIEDERAUFFINDEN EINER EINSTELLBAREN SOLLWINKELSTELLUNG**

(71) Anmelder: INSORS GmbH, 55595 Münchwald (DE)
(72) Erfinder: HORACEK, Gregor, D-56235 Ransbach-Baumbach (DE)
(74) Vertreter: Franke, Markus

(57) **Zusammenfassung**

Die Erfindung betrifft eine Stangenverbindereinrichtung (1) zum variablen winkelstabilen Verbinden von einer ersten Stange und einer zweiten Stange eines Gestänges. Ferner betrifft die Erfindung ein Verfahren zum Halten eines Endgeräts an einem Rollstuhl. Stangenverbindereinrichtung (1) weist eine Rastiereinheit (90) zum Wiederauffinden einer einstellbaren Sollwinkelstellung auf. Die Stangenverbindereinrichtung (1) weist ferner auf:
- eine erste Aufnahmeeinheit (10), wobei die erste Aufnahmeeinheit (10) eine erste Stangenaufnahme (11) für die erste Stange aufweist,
- eine zweite Aufnahmeeinheit (20), wobei die zweite Aufnahmeeinheit (20)
eine zweite Stangenaufnahme (21) für die zweite Stange aufweist, wobei die erste Aufnahmeeinheit (10) und die zweite Aufnahmeeinheit (20) miteinander gekoppelt und von einer Losstellung in eine Klemmstellung überführbar sind, wobei die Aufnahmeeinheiten (10, 20) in der Losstellung um eine Drehachse (A1) zueinander drehbar sind zum Variieren eines Winkels der Aufnahmeeinheiten (10, 20) zueinander, wobei die Aufnahmeeinheiten (10, 20) in der Klemmstellung drehsicher fixiert sind.

## Beschreibung

Die Erfindung betrifft eine Stangenverbindereinrichtung zum variablen winkelstabilen Verbinden von einer ersten Stange und einer zweiten Stange eines Gestänges. Ferner betrifft die Erfindung ein Verfahren zum Halten eines Endgeräts an einem Rollstuhl. Bei den Stangen des Gestänges kann es sich um Vollstangen oder um Hohlstangen handeln. Vorzugsweise sind die erste Stange und/oder die zweite Stange als Hohlstange, insbesondere als Rohr, ausgebildet. Bei dem Gestänge kann es sich insbesondere um ein Rohrgestänge handeln.

In der technischen Rehabilitation gibt es den Bereich "Unterstützte Kommunikation". Darunter versteht man im Wesentlichen den Einsatz von digitalen Endgeräten, wie z.B. Augensteuerungen und Tabletcomputer mit Softwareapplikationen zur Sprachausgabe, die es Menschen mit eingeschränkten Kommunikationsvermögen (Sprache) ermöglicht, mit dem Umfeld zu kommunizieren. Diese Endgeräte werden mit speziellen Halterungen an einen Rollstuhl, auf einem Tisch, an einem Bett, oder auf einem Bodenständer befestigt. Die Halterungen weisen in der Regel ein Gestänge mit zumindest zwei Stangen und eine die zwei Stangen verbindende Stangenverbindereinrichtung auf. Gegebenenfalls weist die Halterung spezielle Adapter zur Anbringung des Gestänges an Rollstühlen, Bodenständern, Tischen oder Betten auf.

Die vorliegende Erfindung ist aber nicht auf den vorgenannten Einsatzbereich beschränkt. So kann die vorliegende Erfindung auch bei Gestängen zur Verwendung mit Halterungen für Fotoapparate, Kameras, etc. Anwendung finden.

Die korrekte und stabile Ausrichtung bzw. Justage der Endgeräte zu der das Endgerät verwendenden Person ist wesentlich, um eine korrekte Interaktion zwischen dem Endgerät und dem Verwender und somit die korrekte und komfortable Nutzung des Endgeräts durch den Verwender zu ermöglichen. Dabei ist es notwendig, die Stangen des Gestänges, die zur Halterung des Endgeräts, beispielsweise an einem Rollstuhl und/oder einem Bett, dienen, zueinander auszurichten, wobei zu diesem Zweck eine Winkelverstellung der Stangen zueinander notwendig ist. Zu diesem Zwecke werden in der Regel Stangenverbindereinrichtungen eingesetzt, die eine erste Stange und eine zweite Stange miteinander verbinden. Derartige Stangenverbindereinrichtungen weisen in der Regel eine erste Aufnahmeeinheit und eine mit der ersten Aufnahmeeinheit gekoppelte zweite Aufnahmeeinheit auf, wobei die erste Aufnahmeeinheit eine erste Stangenaufnahme für die erste Stange aufweist und die zweite Aufnahmeeinheit eine zweite Stangenaufnahme für die zweite Stange aufweist. Die erste Aufnahmeeinheit und die zweite Aufnahmeeinheit sind dabei derart gestaltet, dass die erste Aufnahmeeinheit und die zweite Aufnahmeeinheit von einer Losstellung in eine Klemmstellung überführbar sind, wobei die Aufnahmeeinheiten in der Losstellung um eine Drehachse zueinander drehbar sind zum Variieren eines Winkels der Aufnahmeeinheiten zueinander. In der Klemmstellung sollen hingegen die Aufnahmeeinheiten drehsicher fixiert sein. Derartige Stangenverbindereinrichtungen werden häufig auch als Stangengelenke oder als 360°-Gelenke bezeichnet. Bei als Rohrgestänge ausgeführten Gestängen werden derartige Gelenke auch als Rohrgelenke bezeichnet.

Die exakte Winkelausrichtung der ersten Aufnahmeeinheit und der zweiten Aufnahmeeinheit zueinander ist Wesentlich, um eine korrekte Verwendung des Endgeräts zu ermöglichen. Häufig sind dabei die erste Stange und die zweite Stange bei deren Verwendung, somit in einer Nutzungsposition, annähernd senkrecht zueinander ausgerichtet, beispielsweise beträgt der Winkel zwischen der ersten Stange und der zweiten Stange zwischen 70° und 110°.

In der Praxis ist es häufig notwendig oder wünschenswert, die erste Stange und die zweite Stange in eine platzsparende eingeschwenkte Position zu verschwenken. Dadurch kann die Gesamtheit von erster Stange, zweiter Stange und Stangenverbindereinrichtung beispielsweise platzsparend verstaut werden. Zu diesem Zweck werden die erste Aufnahmeeinheit und die zweite Aufnahmeeinheit von der Klemmstellung in die Losstellung überführt und anschließend zueinander um die Drehachse verschwenkt, um die erste und die zweite Stange in eine Winkelstellung zu überführen, in der die erste Stange und die zweite Stange parallel nebeneinander verlaufen. In der eingeschwenkten Position kann eine besonders kompakte Anordnung der Gesamtheit von erster Stange, zweiter Stange und Stangenverbindereinrichtung erreicht werden. Problematisch dabei ist, die erste und die zweite Stange aus der eingeschwenkten Position wieder exakt in die Nutzungsposition zu verschwenken, um beispielsweise ein an der zweiten Stange gehaltertes Endgerät wieder optimal zu dem Verwender auszurichten. Dieser Prozess kann sich sehr aufwendig und zeitraubend gestalten. Häufig kommt erschwerend hinzu, dass Personen mit motorischen Beeinträchtigungen einen solchen Justiervorgang nicht selbst durchführen können und daher auf die Hilfe von Dritten angewiesen sind. Insbesondere dann, wenn nur wenige Dritte, zum Beispiel Betreuungspersonen, den Justagevorgang für die Endgerätehalterungen von mehreren Personen durchführen müssen, kann die Gesamtzeit und somit die Wartezeit für die einzelne Person sehr lange werden.

Vor diesem Hintergrund besteht Bedarf an einer Stangenverbindereinrichtung, die es ermöglicht, einfach und reproduzierbar eine einstellbare Sollwinkelstellung wiederaufzufinden. Ferner ist es Aufgabe der Erfindung ein diesbezüglich verbessertes Verfahren zum Halten eines Endgeräts an einem Rollstuhl anzugeben.

Gelöst werden diese Aufgaben durch die Gegenstände der unabhängigen Ansprüche. Die abhängigen Ansprüche betreffen vorteilhafte Weiterbildungen.

Die erfindungsgemäße Stangenverbindereinrichtung dient zum variablen winkelstabilen Verbinden von einer ersten Stange und einer zweiten Stange eines Gestänges miteinander. Insofern kann über die Stangenverbindereinrichtung eine Verbindung zwischen der ersten Stange und der zweiten Stange in verschiedenen Winkelstellungen erfolgen, insbesondere um eine mit einem der Stangen direkt oder indirekt verbundene Halterung in ihrer Ausrichtung und Position zu einem Verwender auszurichten und anschließend zu fixieren.

Die Stangenverbindereinrichtung weist auf:
- eine erste Aufnahmeeinheit, wobei die erste Aufnahmeeinheit eine erste Stangenaufnahme für die erste Stange aufweist,
- eine zweite Aufnahmeeinheit, wobei die zweite Aufnahmeeinheit eine zweite Stangenaufnahme für die zweite Stange aufweist.

Die erste Aufnahmeeinheit und die zweite Aufnahmeeinheit sind miteinander gekoppelt und von einer Losstellung in eine Klemmstellung überführbar, wobei die Aufnahmeeinheiten in der Losstellung um eine Drehachse zueinander drehbar sind zum Variieren eines Winkels der Aufnahmeeinheiten zueinander, wobei die Aufnahmeeinheiten in der Klemmstellung drehsicher fixiert sind. Ferner weist die Stangenverbindereinrichtung eine Rastiereinheit zum Wiederauffinden einer einstellbaren Sollwinkelstellung auf. Die Rastiereinheit weist ein in der ersten Aufnahmeeinheit gelagertes Rastelement und ein in der zweiten Aufnahmeeinheit gelagertes Gegenelement mit einer Raststruktur für das Rastelement auf. Das Rastelement ist über ein Federkraftelement in Richtung des Gegenelements federkraftbeaufschlagt, wobei bei einem Verdrehen der ersten Aufnahmeeinheit und der zweiten Aufnahmeeinheit zueinander um die Drehachse in der Sollwinkelstellung das Rastelement mit der Raststruktur des Gegenelements rastierend zusammenwirkt. Das Gegenelement ist von einem Arretierzustand in einen Verstellzustand überführbar, wobei das Gegenelement in dem Verstellzustand um die Drehachse drehbar in der zweiten Aufnahmeeinheit gelagert ist zum Einstellen der Sollwinkelstellung durch Verändern einer Winkellage der Raststruktur in der zweiten Aufnahmeeinheit, wobei das Gegenelement in dem Arretierzustand drehfest in der zweiten Aufnahmeeinheit gelagert ist zum Arretieren der eingestellten Sollwinkelstellung.

In dem Arretierzustand des Gegenelements ist das Gegenelement hinsichtlich seiner Winkellage in der zweiten Aufnahmeeinheit daher festgelegt, sodass dadurch auch die Winkellage der Raststruktur festgelegt ist, wobei die Winkellage der Raststruktur in der zweiten Aufnahmeeinheit zu der Sollwinkelstellung korrespondiert. Um die Sollwinkelstellung zwischen der ersten Aufnahmeeinheit und der zweiten Aufnahmeeinheit und somit zwischen der ersten Stange und der zweiten Stange bei Verwendung der Stangenverbindereinrichtung wiederaufzufinden, können die erste Aufnahmeeinheit und die zweite Aufnahmeeinheit in der Losstellung um die Drehachse relativ zueinander verdreht werden, wobei in der durch die Raststruktur definierten Sollwinkelstellung das Rastelement mit der Raststruktur rastierend zusammenwirkt und dadurch das Erreichen der Sollwinkelstellung anzeigt. Beispielsweise können das Rastelement und die Raststruktur in der Sollwinkelstellung derart zusammenwirken, dass das Rastelement hör- und spürbar in die Raststruktur einrastet. Darüber hinaus ist es durchaus denkbar, dass die Raststruktur und das Rastelement in der Sollwinkelstellung derart miteinander zusammenwirken, dass ein Verdrehen der Aufnahmeeinheiten zueinander aus der Sollwinkelstellung heraus mit einem erhöhten Kraftaufwand verbunden ist, um die Raststruktur und das Rastelement aus der in der Sollwinkelstellung vorliegenden Raststellung zu lösen, um ein Verlassen der Sollwinkelstellung bzw. ein Überdrehen der Sollwinkelstellung für den Verwender erkennbar zu machen.

Sobald die Sollwinkelstellung erreicht ist, können die Aufnahmeeinheiten von der Losstellung in die Klemmstellung überführt werden, um die Aufnahmeeinheiten in der Sollwinkelstellung drehsicher zueinander zu fixieren. In diesem Zusammenhang ist insbesondere zu beachten, dass die Rastiereinheit vorzugsweise nicht dazu eingerichtet ist, die erste Aufnahmeeinheit und die zweite Aufnahmeeinheit in der Sollwinkelstellung drehfest zu fixieren. Vielmehr wird es als besonders vorteilhaft angesehen, wenn die Rastiereinheit lediglich zum Anzeigen bzw. Wiederauffinden der Sollwinkelstellung dient. Dadurch ist es möglich, die Stangenverbindereinrichtung beispielsweise in eine nicht mit der Sollwinkelstellung übereinstimmende zusammengeklappt Anordnung zu überführen, ohne Blockade des Verdrehens durch die Rastiereinheit.

Bei der ersten Stange und/oder der zweiten Stange kann es sich um eine Vollstange oder um eine Hohlstange handeln. Vorzugsweise sind die erste Stange und/oder die zweite Stange als Hohlstange, insbesondere als Rohr, ausgebildet. Bei dem Gestänge kann es sich insbesondere um ein Rohrgestänge handeln.

In einer besonders bevorzugten Ausführungsform ist vorgesehen, dass es sich bei einem Material der ersten Aufnahmeeinheit und der zweiten Aufnahmeeinheit um ein metallisches Material, insbesondere um Aluminium, handelt. Die Verwendung eines metallischen Materials hat sich als vorteilhaft erwiesen, um die notwendigen Kräfte beschädigungsfrei und deformationsfrei zu halten.

Die erste und die zweite Stange weisen vorzugsweise, aber nicht notwendiger Weise, einen runden Querschnitt auf.

Vorzugsweise ist das Rastelement außerhalb der Drehachse der Stangenverbindereinrichtung ausgebildet. Ferner wird es als vorteilhaft angesehen, wenn die Raststruktur des Gegenelements außerhalb der Drehachse der Stangenverbindereinrichtung ausgebildet ist.

Vorzugsweise wirkt das Federkraftelement in der axialen Richtung, sodass ein Verschieben des Rastelements in der axialen Richtung der Drehachse erfolgt.

In einer besonders bevorzugten Ausführungsform ist vorgesehen, dass das Gegenelement eine einzige Raststruktur aufweist. Dementsprechend gibt es nur eine einzige Winkelstellung, nämlich die Sollwinkelstellung, in der das Rastelement rastierend mit der Raststruktur des Gegenelements rastierend zusammenwirkt.

In einer besonders bevorzugten Ausführungsform ist vorgesehen, dass die Rastiereinheit ein Verspannelement aufweist, wobei das Verspannelement einen Verspannabschnitt aufweist, wobei die zweite Aufnahmeeinheit eine Anpressfläche für das Gegenelement aufweist, wobei das Verspannelement axial verschiebbar in der zweiten Aufnahmeeinheit gelagert ist, wobei durch ein axiales Verschieben des Verspannelements das Gegenelement von dem Verstellzustand in den Arretierzustand überführbar ist und umgekehrt, wobei in dem Arretierzustand das Gegenelement klemmend zwischen dem Verspannabschnitt und der Anpressfläche und durch Kraftschluss bzw. Reibschluss mit dem Verspannabschnitt und mit der Anspressfläche drehfest in der zweiten Aufnahmeeinheit gehalten ist und in dem Verstellzustand das Gegenelement bezüglich der zweiten Aufnahmeeinheit um die Drehachse drehbar ist.

Es wird als vorteilhaft angesehen, insbesondere in Hinblick auf eine Vormontage, wenn das Gegenelement auf dem Verspannelement gelagert ist.

Die Arretierung des Gegenelements in der zweiten Aufnahmeeinheit erfolgt dementsprechend durch ein Verspannen des Gegenelements zwischen dem Verspannabschnitt des Verspannelements und der Anpressfläche der zweiten Aufnahmeeinheit. In dem Verstellzustand hingegen ist das Gegenelement bezüglich der zweiten Aufnahmeeinheit um die Drehachse drehbar. In dem Verstellzustand kann durch Verdrehen des Gegenelements um die Drehachse bezüglich der zweiten Aufnahmeeinheit die Winkellage der Raststruktur und somit die Sollwinkelstellung verändert werden.

Dabei wird es als besonders vorteilhaft angesehen, wenn in dem Verstellzustand das Rastelement und die Raststruktur bzw. das Gegenelement derart gestaltet sind, dass diese beiden Elemente auch im Verstellzustand rastierend zusammenwirken. Dadurch kann bei in dem Verstellzustand befindlichem Gegenelement und in der Losstellung befindlichen Aufnahmeeinheiten durch Drehen der Aufnahmeeinheiten zueinander um die Drehachse das Rastelement, welches sich zusammen mit der ersten Aufnahmeeinheit um die Drehachse dreht, das Gegenelement mitnehmen, sodass das Gegenelement dem Drehen des Rastelements bzw. der ersten Aufnahmeeinheit bezüglich der zweiten Aufnahmeeinheit folgt, wodurch eine Winkellage der Raststruktur auf einfache Art und Weise verändert werden kann. Ist die gewünschte Sollwinkelstellung zwischen der ersten Aufnahmeeinheit und der zweiten Aufnahmeeinheit bzw. der ersten Stange und der zweiten Stange erreicht, können die Aufnahmeeinheiten in die Klemmstellung überführt werden, um diese drehfest zueinander zu fixieren. Anschließend kann das Verspannelement derart axial verschoben werden, dass das Gegenelement von dem Verstellzustand in den Arretierzustand übergeht, wodurch die Winkellage der Raststruktur in der zweiten Aufnahmeeinheit festgelegt wird, wobei diese Winkellage der Raststruktur zu dem aktuell eingestellten Winkel zwischen der ersten Aufnahmeeinheit und der zweiten Aufnahmeeinheit korrespondiert, sodass der aktuell eingestellte Winkel als Sollwinkel bzw. Sollwinkelstellung festgelegt wird.

In einer besonders bevorzugten Ausführungsform ist vorgesehen, dass das Gegenelement auf dem Verspannelement drehbar gelagert ist.

In einer vorteilhaften Weiterbildung ist vorgesehen, dass der Verspannabschnitt einen sich verändernden Außendurchmesser aufweist, der einen Außenkonus bildet, und wobei das Gegenelement einen sich verändernden Innendurchmesser aufweist, der einen zu dem Außenkonus korrespondierenden Innenkonus bildet. Die konische Gestaltung ermöglicht eine besonders hohe axialen Kraftaufnahme und dadurch einen besonders starken Kraftschluss bzw. Reibschluss zum drehfesten Halten des Gegenelements in dem Arretierzustand.

Zudem hat eine konische Ausbildung den Vorteil, dass in dem Arretierzustand eine Selbstzentrierung erfolgt, wodurch eine besonders stabile Lage des Gegenelements in der radialen Richtung gewährleistet ist. Auf diese Weise kann eine besonders genaue radiale Ausrichtung der Raststruktur zu dem Rastelement erreicht werden, wodurch wiederum die Genauigkeit des Wiederauffindens der Sollwinkelstellung erhöht werden kann.

Es wird als besonders vorteilhaft angesehen, wenn das Verspannelement an einem Montageelement befestigt ist, wobei das Montageelement zumindest einen Gewindeabschnitt aufweist, wobei ein Schraubelement mit dem Gewindeabschnitt verschraubt ist, wobei ein drehendes Anziehen des Schraubelements zu einem axialen Verschieben des Verspannabschnitts in Richtung der Anpressfläche führt.

In einer bevorzugten Weiterbildung ist vorgesehen, dass das Schraubelement als Schraube mit einem Kopfabschnitt ausgebildet ist und sich das Schraubelement beim Anziehen mit dem Kopfabschnitt auf einer dem Verspannabschnitt abgewandten Seite der zweiten Aufnahmeeinheit an der zweiten Aufnahmeeinheit abstützt.

In einer bevorzugten Weiterbildung ist vorgesehen, dass der zumindest eine Gewindeabschnitt parallel zu der Drehachse ausgebildet ist.

Als besonders vorteilhaft wird es angesehen, wenn das Montageelement in einer in der zweiten Aufnahmeeinheit ausgebildeten Ausnehmung gelagert ist. Dabei wird es als besonders vorteilhaft angesehen, wenn eine Tiefe der Ausnehmung derart ist, dass zwischen einem Boden der Ausnehmung und dem Montageelement in dem Arretierzustand ein Spalt verbleibt, um zu gewährleisten, dass das Gegenelement an der Anpressfläche anliegt und dadurch zwischen der Anpressfläche und dem Verspannabschnitt klemmend gehalten wird.

Als besonders vorteilhaft wird es angesehen, wenn das Verspannelement drehfest in der zweiten Aufnahmeeinheit gelagert ist.

In einer besonders bevorzugten Ausführungsform ist vorgesehen, dass das Gegenelement ringförmig ausgebildet ist. Eine ringförmige Gestaltung des Gegenelements ist dahingehend als vorteilhaft anzusehen, dass ein Verkippen des Gegenelements in der zweiten Aufnahmeeinheit vermieden wird und dementsprechend das Gegenelement besonders lagestabil in der zweiten Aufnahmeeinheit gelagert ist. Bei einer Ausführungsform, in der das Gegenelement in dem Arretierzustand zwischen der Anpressfläche und dem Verspannabschnitt klemmend gehalten wird, wird durch eine ringförmige Gestaltung eine möglichst große und homogene Belastung der aneinander anliegenden Flächen erzielt, wodurch lokale Druckspitzen vermieden werden. Ferner hat eine ringförmige Gestaltung den Vorteil, dass an dem ringförmigen Gegenelement eine mit dem Rastelement zusammenwirkende Kontaktfläche ausgebildet werden kann, die abgesehen von der Raststruktur umlaufend um die Drehachse homogen ausgebildet sein kann. Dadurch kann beim Verdrehen der ersten Aufnahmeeinheit und der zweiten Aufnahmeeinheit zueinander besonders einfach die Sollwinkelstellung aufgefunden werden, da lediglich im Bereich der Raststruktur eine signifikante Veränderung der Lage des Rastelements auftreten wird. Diese Lageänderung kann beispielsweise mit dem Auge erkennbar und/oder hörbar und/oder spürbar sein.

In einer besonders bevorzugten Ausführungsform ist vorgesehen, dass in dem Verstellzustand das Rastelement mit der Raststruktur des Gegenelements derart zusammenwirkt, dass bei einem Verdrehen der ersten Aufnahmeeinheit und der zweiten Aufnahmeeinheit zueinander um die Drehachse das Gegenelement durch das Rastelement mitgenommen wird.

Es wird als besonders vorteilhaft angesehen, wenn die Raststruktur als Rücksprung, beispielsweise in Form einer Senkung oder eines Sacklochs, oder als Durchgangsloch ausgebildet ist. Eine solche Raststruktur kann einfach hergestellt werden und gewährleistet eine monostabile Rastposition, insbesondere wenn das Rastelement als Rastpin ausgebildet ist.

Ein Durchgangsloch kann beispielsweise durch eine Durchgangsbohrung durch das Gegenelement gebildet sein.

Als besonders vorteilhaft wird es angesehen, wenn das Gegenelement scheibenförmig ausgebildet ist.

In einer vorteilhaften Weiterbildung ist vorgesehen, dass das Rastelement und die Raststruktur derart gestaltet sind, dass in dem Arretierzustand ein Verdrehen der ersten Aufnahmeeinheit und der zweiten Aufnahmeeinheit zueinander aus der Sollwinkelstellung heraus unter Überwindung eines durch das rastierende Zusammenwirken des Rastelements mit der Raststruktur bedingten Rastwiderstands möglich ist.

Eine derartige Ausführungsform ist dahingehend als vorteilhaft anzusehen, dass auf eine separate an dem Rastelement vorzunehmende Bedienenhandlung, beispielsweise auf ein händisches Herausziehen oder Lösen des Rastelements aus der Raststruktur, verzichtet werden kann und dennoch in der Losstellung ein Verdrehen der ersten Aufnahmeeinheit und der zweiten Aufnahmeeinheit aus der Sollwinkelstellung heraus möglich ist.

Insbesondere in diesem Zusammenhang wird es als besonders vorteilhaft angesehen, wenn das Rastelement eine mit der Raststruktur zusammenwirkende Rastspitze aufweist, wobei die Rastspitze einen Öffnungswinkel von 40° bis 90°, vorzugsweise von 45° bis 65°, besonders bevorzugt von 50° bis 60°, aufweist.

Der vorgenannte Winkelbereich bewirkt, dass die Rastspitze derart mit der Raststruktur zusammenwirkt, dass eine seitlich wirkende Kraftkomponente, wie sie beim Verdrehen der ersten Aufnahmeeinheit und der zweiten Aufnahmeeinheit zueinander zwischen der Raststruktur und der Spitze des Rastelements auftritt, in eine zu der seitlichen Bewegung senkrechten Hubbewegung des Rastelements entgegen der Rückstellkraft des Federkraftelements erfolgt. Bei dem vorgenannten Winkelbereich ist die Rastkraft ausreichend groß um einen ausreichenden Widerstand zu spüren und dennoch eine Hubbewegung des Rastelements bei moderaten Drehmomenten bzw. moderatem Kraftaufwand zum Verdrehen der Aufnahmeeinheiten zueinander aus der Sollwinkelstellung zu erreichen, insofern eine Blockade der Aufnahmeeinheiten beim Verdrehen durch die Rasteinheit zu vermeiden. Zudem haben sich die vorgenannten Winkelbereiche als vorteilhaft erwiesen, um in dem Verstellzustand eine ausreichende Rastkraft zu bewirken, um bei einem Verdrehen der Aufnahmeeinheiten eine Mitnahme des Gegenelements durch das Rastelement zu gewährleisten.

In einer bevorzugten Weiterbildung ist vorgesehen, dass die Raststruktur auf einer der ersten Aufnahmeeinheit zugewandten Stirnfläche des Gegenelements ausgebildet ist. Eine derartige Gestaltung ist insbesondere vor dem Hintergrund einer Montage und Demontage der ersten Aufnahmeeinheit von der zweiten Aufnahmeeinheit als vorteilhaft anzusehen, da eine Montage bzw. Demontage typischerweise entlang der Drehachse erfolgt, sodass bei in der ersten Aufnahmeeinheit vormontiertem Rastelement und in der zweiten Aufnahmeeinheit vormontiertem Gegenelement sichergestellt ist, dass das Rastelement mit der Stirnfläche des Gegenelements in Kontakt kommt, insbesondere ohne weitere Handlungen vorzunehmen.

Grundsätzlich ist es aber auch denkbar, dass die Raststruktur an einer Umfangsfläche des Gegenelements ausgebildet ist und das Rastelement mit der Umfangsfläche in Kontakt ist. Dementsprechend wäre bei einer solchen Ausführungsform das Rastelement gewinkelt, insbesondere senkrecht, zu der Drehachse ausgerichtet.

Es wird als besonders vorteilhaft angesehen, wenn das Rastelement einen dem Gegenelement abgewandten Endabschnitt aufweist, wobei der Endabschnitt die erste Aufnahmeeinheit durchsetzt. Als besonders vorteilhaft wird es angesehen, wenn der Endabschnitt gegenüber einer der zweiten Aufnahmeeinheit abgewandten Stirnfläche der ersten Aufnahmeeinheit hervorsteht. Anhand des Maßes des Überstands des Endabschnitts gegenüber der Stirnfläche der ersten Aufnahmeeinheit kann dann darauf geschlossen werden, ob das Rastelement in die Raststruktur eingerastet ist und sich insofern die beiden Aufnahmeeinheiten in der Sollwinkelstellung befinden oder nicht.

In diesem Zusammenhang wird es als besonders vorteilhaft angesehen, wenn das Rastelement über einen mit dem Endabschnitt verbundenen Sicherungsring verliersicher in der ersten Aufnahmeeinheit gesichert ist.

In einer besonders bevorzugten Ausführungsform ist vorgesehen, dass die erste Aufnahmeeinheit eine erste Reibfläche aufweist und die zweite Aufnahmeeinheit eine zweite Reibfläche aufweist, wobei in der Klemmstellung die erste Aufnahmeeinheit und die zweite Aufnahmeeinheit entlang der Drehachse aneinander gepresst sind, derart, dass die Reibflächen kraftschlüssig bzw. reibschlüssig zusammenwirken zum drehsicheren Fixieren der Aufnahmeeinheiten.

Dabei wird es als besonders vorteilhaft angesehen, wenn die zumindest eine der ersten Reibfläche und der zweiten Reibfläche eine oder mehrere konzentrisch zu der Drehachse verlaufende Federn und die andere der ersten Reibfläche und der zweiten Reibfläche eine oder mehrere konzentrisch zu der Drehachse verlaufende, zu der einen oder den mehreren Federn korrespondierende Nuten aufweist, wobei in der Klemmstellung die eine oder die mehreren Federn der jeweiligen Reibfläche kraftschlüssig bzw. reibschlüssig mit den einen oder den mehreren Nuten der jeweils anderen Reibfläche.

Hinsichtlich des Überführens der Aufnahmeeinheiten von der Losstellung in die Klemmstellung wird es als vorteilhaft angesehen, wenn die Stangenverbindereinrichtung eine Betätigungseinrichtung aufweist zum Überführen der ersten Aufnahmeeinheit und der zweiten Aufnahmeeinheit von der Losstellung in die Klemmstellung entlang der Drehachse und Halten der Aufnahmeeinheiten in der Klemmenstellung wobei die Betätigungseinrichtung ein die erste Aufnahmeeinheit entlang der Drehachse durchsetzendes Achselement aufweist, wobei das Achselement einen Gewindeabschnitt aufweist, wobei die zweite Aufnahmeeinheit einen Gegengewindeabschnitt aufweist, wobei das Achselement mit seinem Gewindeabschnitt in den Gegengewindeabschnitt eingeschraubt ist, wobei eine Achse des Achselements mit der Drehachse zusammenfällt.

Dabei ist es durchaus denkbar, dass das Achselement als Schraube ausgebildet ist.

Ferner ist es denkbar, dass die Betätigungseinrichtung einen mit dem Achselement zusammenwirkenden Betätigungshebel aufweist zum Überführen der ersten Aufnahmeeinheit und der zweiten Aufnahmeeinheit von der Losstellung in die Klemmstellung.

Das erfindungsgemäße Verfahren dient zum Halten eines Endgeräts an einem Rollstuhl. Dabei ist vorgesehen, dass zum Halten des Endgeräts ein Gestänge an dem

Rollstuhl befestigt wird, wobei das Gestänge zumindest eine erste Stange und eine zweite Stange aufweist, wobei die erste Stange und die zweite Stange über die erfindungsgemäße Stangenverbindereinrichtung miteinander verbunden sind.

Die obigen Ausführungen zu den Vorteilen und vorteilhaften Weiterbildungen der Stangenverbindereinrichtung gelten entsprechend für das Verfahren und umgekehrt.

In den nachfolgenden Figuren wird die Erfindung anhand von Ausführungsbeispielen näher erläutert, ohne auf diese beschränkt zu sein. Es zeigen:
- Figur 1: eine Anordnung von einer ersten Stange und einer zweiten Stange, wobei die erste und die zweite Stange mittels einer ersten Ausführungsform einer Stangenverbindereinrichtung miteinander verbunden sind, in einer Sollwinkelstellung in einer perspektivischen Ansicht,
- Figur 2: die Anordnung gemäß Figur 1 in einer zusammengeklappten Stellung in einer perspektivischen Ansicht,
- Figur 3: die Stangenverbindereinrichtung gemäß Figur 1 in einer perspektivischen Ansicht,
- Figur 4: die Stangenverbindereinrichtung gemäß Figur 3 in einer Explosionsdarstellung,
- Figur 5: die Stangenverbindereinrichtung gemäß Figur 3 in Draufsicht in der axialen Richtung gemäß dem Pfeil V in Fig. 6,
- Figur 6A: die Stangenverbindereinrichtung in einer Schnittansicht gemäß der Linie B-B in Figur 5 in einem ersten Zustand (Arretierzustand und Klemmstellung),
- Figur 6B: die Stangenverbindereinrichtung in einer Schnittansicht gemäß der Linie B-B in Figur 5 in einem zweiten Zustand (Verstellzustand und Losstellung),
- Figur 7: ein Teilbereich der Figur 6A in einer vergrößerten Darstellung,
- Figur 8A: die Stangenverbindereinrichtung in einer Schnittansicht gemäß der Linie A-A in Figur 5 in dem ersten Zustand wie in Figur 6A,
- Figur 8B: die Stangenverbindereinrichtung in einer Schnittansicht gemäß der Linie B-B in Figur 5 in dem zweiten Zustand wie in Figur 6B,
- Figur 9: eine zweite Aufnahmeeinheit der Stangenverbindereinrichtung gemäß Fig. 3 in einer perspektivischen Ansicht,

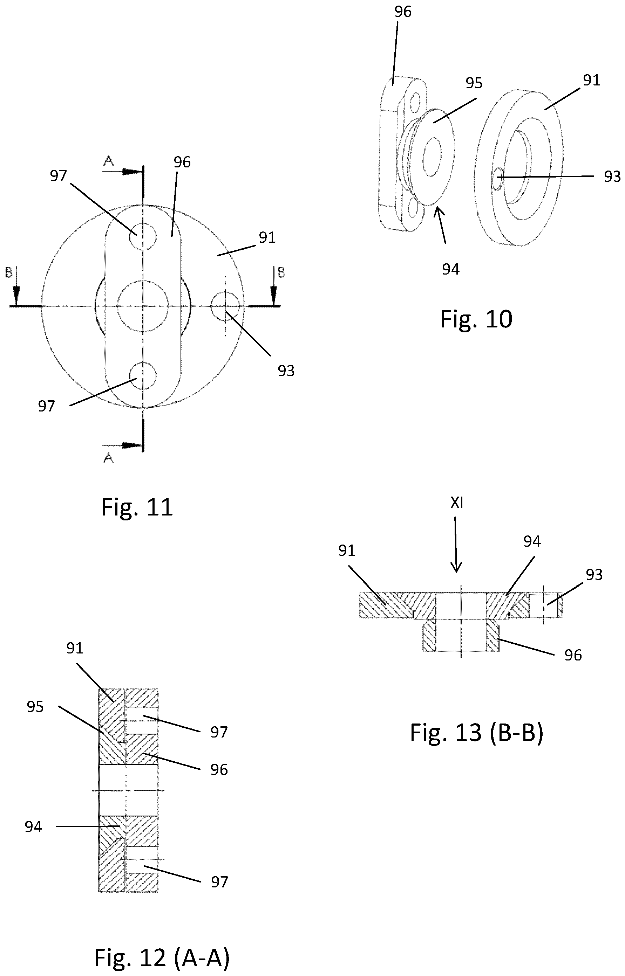

- Figur 10: in der zweiten Aufnahmeeinheit gelagerte Komponenten einer Rastiereinheit in einer Explosionsdarstellung,
- Figur 11: die Komponenten der Rastiereinheit in einer Draufsicht in der axialen Richtung gemäß dem Pfeil XI in Fig. 13,
- Figur 12: die Komponenten in einer Schnittansicht gemäß der Linie A-A in Figur 11,
- Figur 13: die Komponenten in einer Schnittansicht gemäß der Linie B-B in Figur 11,
- Figur 14: eine Anordnung von einem Rollstuhl und einem an dem Rollstuhl über eine Halteanordnung befestigten Endgerät,
- Figur 15: die Halteanordnung in einer perspektivischen Ansicht,
- Figur 16: Komponenten einer weiteren Ausführungsform einer Rasteinheit in einer perspektivischen Ansicht,
- Figur 17: die Komponenten in einer Explosionsdarstellung.

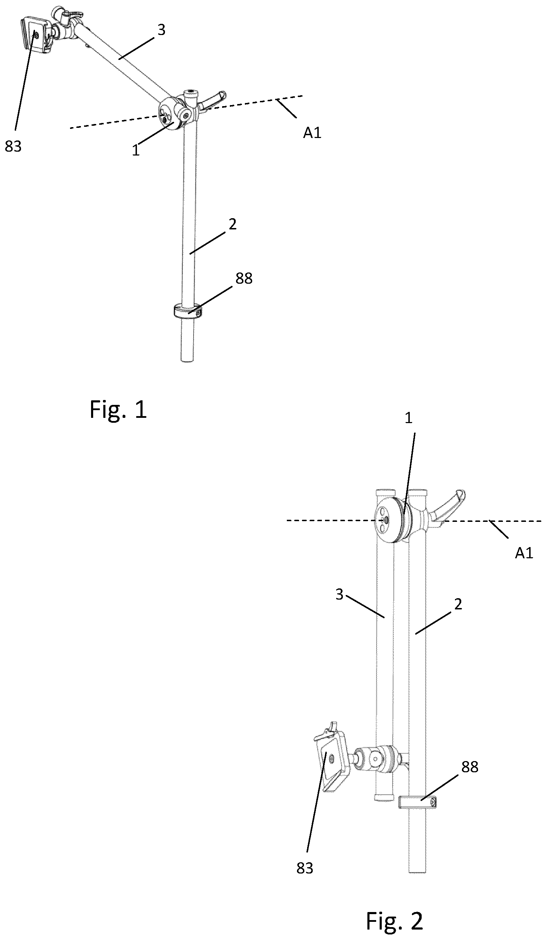

Die Figuren 1 bis 7 zeigen eine erste Ausführungsform einer Stangenverbindereinrichtung 1. Die Figur 1 zeigt dabei eine Anordnung von einer als Rohr ausgebildeten ersten Stange 2 und einer als Rohr ausgebildeten zweiten Stange 3, wobei die erste Stange 2 und die zweite Stange 3 über die Stangenverbindereinrichtung 1 miteinander verbunden sind.

Die Stangenverbindereinrichtung 1 dient zum variablen winkelstabilen Verbinden der ersten Stange 2 mit der zweiten Stange 3. Die Stangenverbindereinrichtung 1 ermöglicht die Winkelstellung zwischen der ersten Stange 2 und der zweiten Stange 3 um die Drehachse A1 stufenlos zu verändern, um einen gewünschten Winkel zwischen der ersten Stange 2 und der zweiten Stange 3 einzustellen und anschließend den eingestellten Winkel zu fixieren.

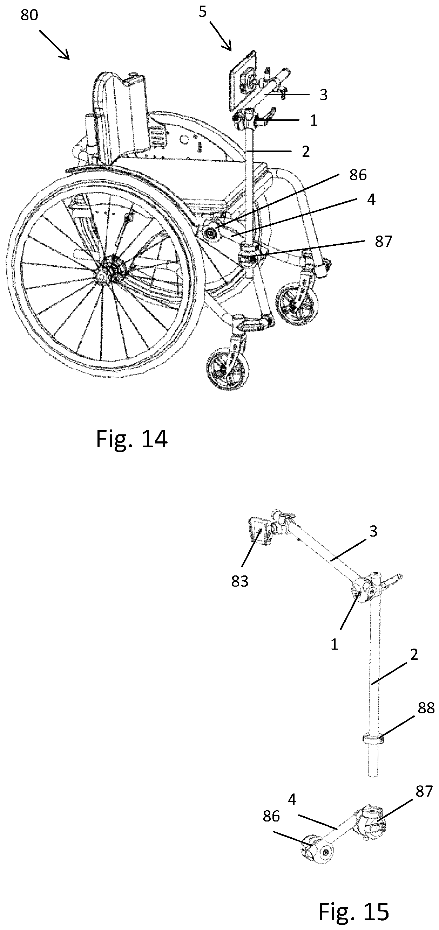

Ein beispielhaftere Anwendungsbereich der Anordnung, wie sie in der Figur 1 gezeigt ist, ist in der Figur 14 gezeigt. Dabei dient die Anordnung gemäß Figur 1 zur Befestigung eines Endgeräts 5 an einem Rollstuhl 80. An dem Rollstuhl 80 ist eine Rahmenklemme 86 befestigt. Die Rahmenklemme 86 nimmt eine Verbindungsstange 4 längsverschiebbar und winkelverstellbar auf. An dem der Rahmenklemme 86 gegenüberliegenden Ende der Verbindungsstange 4 ist ein Schwenkgelenk 87 klemmend befestigt. Das Schwenkgelenk 87 nimmt die erste Stange 2 auf, wobei an der ersten Stange 2 eine Rastscheibe 88 festgeklemmt ist, wobei diese Rastscheibe 88 mit dem Schwenkgelenk 87 zusammenwirkt, um ein Verschwenken der ersten Stange 2 um seine Längsachse in dem Schwenkgelenk 87 um vordefinierte Winkel zu ermöglichen. Die erste Stange 2 ist im Wesentlichen vertikal ausgereichtet, wohingegen die zweite Stange 3 im Wesentlichen waagerecht ausgerichtet ist.

An der zweiten Stange 3, die über die Stangenverbindereinrichtung 1 mit der ersten Stange 2 verbunden ist, ist eine Endgerätehalterung 83 angebracht. Die Endgerätehalterung 83 weist eine Lageraufnahme für das Endgerät 5 auf. Das Endgerät 5, bei dem es sich vorliegend um einen Tabletcomputer handelt, ist in der Lageraufnahme aufgenommenen und dadurch bezüglich des Rollstuhls 80 lagefixiert. In der in der Figur 14 gezeigten Anordnung, befinden sich die erste Stange 2 und die zweite Stange 3 einer Nutzposition, wobei die Position dadurch definiert ist, dass sich die erste Stange 2 und die zweite Stange 3 sich in einer Sollwinkelstellung befinden, sodass das Endgerät 5 für den Verwender zu dessen bestimmungsgemäße Nutzung exakt ausgerichtet ist. Die zweite Stange 3 und die erste Stange 2 sind annähernd senkrecht zueinander ausgerichtet, sodass die Sollwinkelstellung etwa 90° beträgt.

Wenn für die den Rollstuhl nutzende Person beispielsweise ein Transport im Auto oder im Schulbus ansteht, wird das Endgerät 5 von der Endgerätehalterung 83 getrennt und die erste Stange 2 aus dem Schwenkgelenk 87 entnommen. Dieser Zustand ist in der Figur 15 gezeigt. Um ein platzsparendes Verstauen der aus dem Schwenkgelenk 87 entnommenen Gestängeanordnung zu ermöglichen, werden die erste Stange 2 und die zweite Stange 3 aus der Sollwinkelstellung, die in der Figur 1 gezeigt ist, in eine zusammenklappte Stellung überführt, die in der Figur 2 gezeigt ist. Das Zusammenklappen ist über die Stangenverbindereinrichtung 1 ermöglicht.

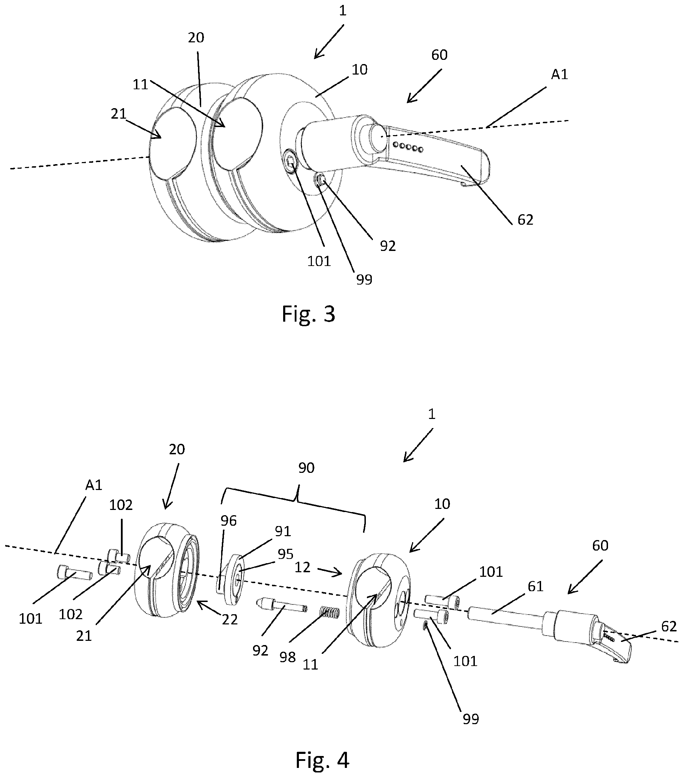

Die Stangenverbindereinrichtung 1 ist in den Figuren 3 bis 8B näher dargestellt. Die Stangenverbindereinrichtung 1 weist eine erste Aufnahmeeinheit 10 auf, wobei die erste Aufnahmeeinheit 10 eine erste Stangenaufnahme 11 für die erste Stange 2 aufweist. Die Stangenverbindereinrichtung 1 weist ferner eine zweite Aufnahmeeinheit 20 auf, wobei die zweite Aufnahmeeinheit 20 eine zweite Stangenaufnahme 21 für die zweite Stange 3 aufweist. Die erste und die zweite Stangenaufnahme 11, 21 sind jeweils als im Querschnitt kreisrunde Durchgangsöffnungen ausgebildet, wobei die jeweilige Aufnahmeeinheit 10, 20 geschlitzt ausgebildet ist, um ein Verengen der Durchgangsöffnungen zu ermöglichen zwecks klemmender Fixierung der jeweiligen Stange 2, 3 in der Stangenaufnahme 11, 21. Die klemmender Fixierung der jeweiligen Stange 2, 3 in der jeweiligen Stangenaufnahme 11, 21 erfolgt über die Klemmschrauben 101.

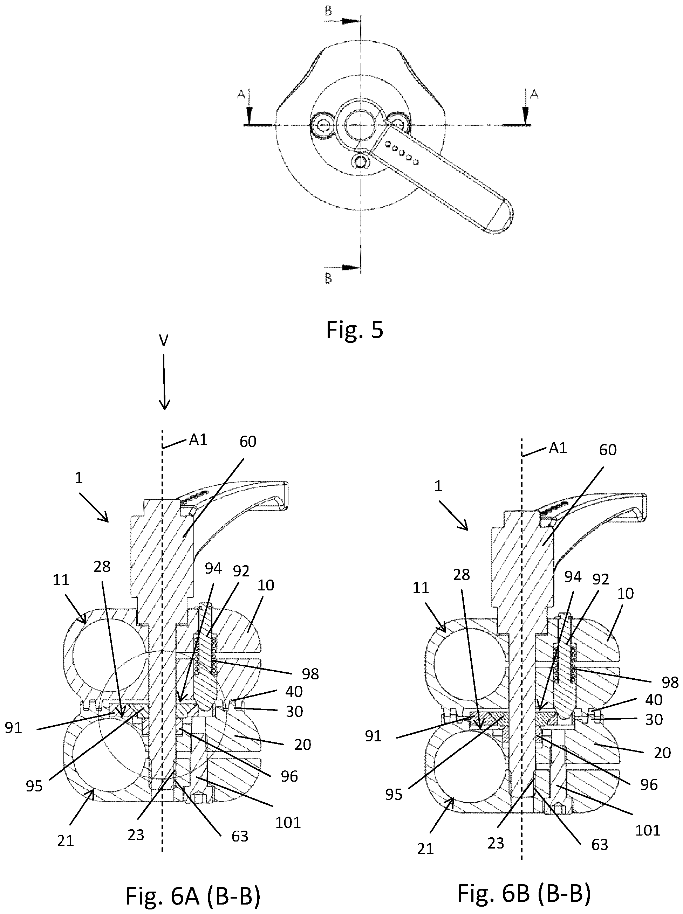

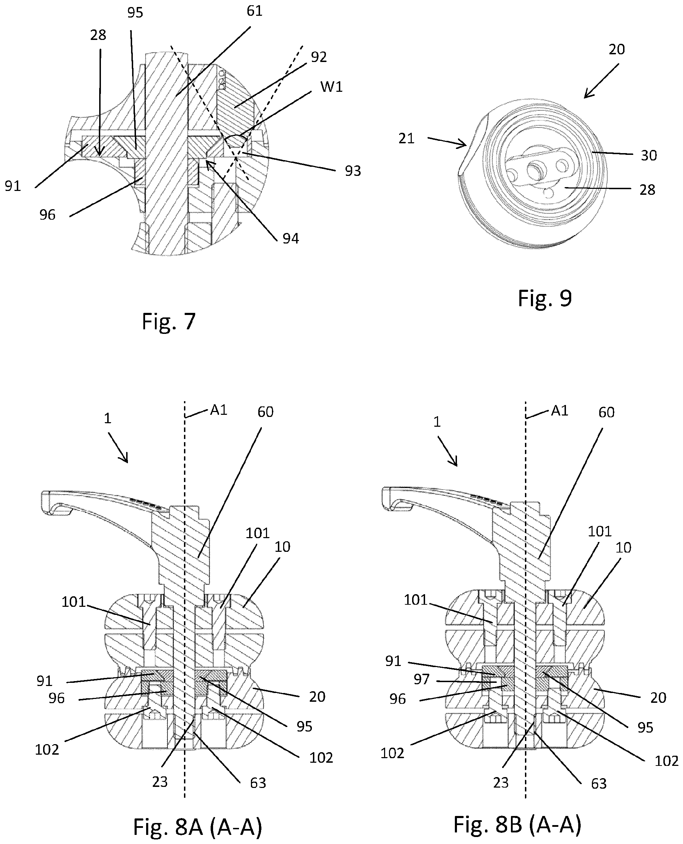

Die erste Aufnahmeeinheit 10 und die zweite Aufnahmeeinheit 20 sind mechanisch miteinander gekoppelt durch eine Betätigungseinrichtung 60. Die Betätigungseinrichtung 60 weist ein Achselement 61 auf, wobei das Achselement 61 die erste Aufnahmeeinheit 10 durchsetzt, derart, dass die Aufnahmeeinheit 10 um die Drehachse A1 drehbar auf dem Achselement 61 gelagert ist. Das Achselement 61 weist einen Gewindeabschnitt 63 auf, wobei die zweite Aufnahmeeinheit 20 einen zu dem Gewindeabschnitt 63 korrespondierenden Gegengewindeabschnitt 23 aufweist, wobei das Achselement 61 mit seinem Gewindeabschnitt 63 in den Gegengewindeabschnitt 23 eingeschraubt ist, wie insbesondere den Figur 6A, 6B und 8A und 8B zu entnehmen ist. Über die Betätigungseinrichtung 60 können die erste Aufnahmeeinheit 10 und die zweite Aufnahmeeinheit 20 entlang der Drehachse A1 durch Einschrauben des Achselements 61 in den Gegengewindeabschnitt 23 der zweiten Aufnahmeeinheit 20 aufeinander zu bewegt, dadurch zusammengepresst und auf diese Weise von einer Losstellung in eine Klemmstellung überführt werden, wie nachfolgend näher beschrieben wird.

Die Figuren 6A und 8A zeigen die Aufnahmeeinheiten 10, 20 in ihrer Klemmstellung. Die Figuren 6B und 8B zeigen die Aufnahmeeinheiten 10, 20 in ihrer Losstellung. Die Klemmstellung unterscheidet sich von der Losstellung dadurch, dass in der Klemmstellung das Achselement 61 weiter in die zweite Aufnahmeeinheit 20 eingeschraubt ist, wodurch die erste Aufnahmeeinheit 10 und die zweite Aufnahmeeinheit 20 entlang der Drehachse A1 zusammengepresst werden. In der Losstellung hingegen ist das Achselement 61 weniger weit in die zweite Aufnahmeeinheit 20 eingeschraubt, sodass die erste Aufnahmeeinheit 10 und die zweite Aufnahmeeinheit 20 entlang der Drehachse A1 nicht zusammengepresst sind. Um das Einschrauben und das Herausschrauben des Achselements 61 aus der zweiten Aufnahmeeinheit 20 zu erleichtern, weist die Betätigungseinrichtung 60 einen Betätigungshebel 62 auf. Häufig wird eine solche Ausgestaltung der Betätigungseinrichtung im Zusammenhang mit Stangenverbindereinrichtung auch mit dem Begriff "Klemmhebel" bezeichnet.

In der Klemmstellung sind eine erste Reibfläche 12 der ersten Aufnahmeeinheit 10 und eine zweite Reibfläche 22 der zweiten Aufnahmeeinheit 20 derart miteinander in Kontakt, dass die Aufnahmeeinheiten 10, 20 in der Klemmstellung drehsicher zueinander fixiert sind. Dementsprechend sind in der Klemmstellung die erste Aufnahmeeinheit 10 und die zweite Aufnahmeeinheit 20 winkelstabil zueinander fixiert durch kraftschlüssiges Zusammenwirken der ersten Reibfläche 12 und der zweiten Reibfläche 22. In der Losstellung hingegen sind die erste Reibfläche 12 und die zweite Reibfläche 22 in der axialen Richtung der Drehachse A1 voneinander beanstandet, wodurch ein Verdrehen der Aufnahmeeinheiten 10, 20 zueinander um die Drehachse A1 in der Losstellung ermöglicht ist, um einen Winkel zwischen den Aufnahmeeinheiten 10, 20 zu variieren.

Um eine besonders hohe Haftreibung in der Klemmstellung zwischen der ersten Reibfläche 12 und der zweiten Reibfläche 22 zu erreichen, weist die erste Reibfläche 12 eine konzentrisch zu der Drehachse A1 verlaufende Nut 40 auf. Die zweite Reibfläche 22 weist eine zu der Nut 40 korrespondierende, konzentrisch zu der Drehachse A1 verlaufende Feder 30 auf.

In der Klemmstellung, die in den Figuren 6 und 8 dargestellt ist, sind die erste Aufnahmeeinheit 10 und die zweite Aufnahmeeinheit 20 durch die Betätigungseinrichtung 60 entlang der Drehachse A1 derart aneinandergepresst, dass die Feder 30 der zweiten Reibfläche 22 in die Nut 40 der ersten Reibfläche 12 eingefahren ist, derart, dass Flanken der Feder 30 an den Flanken der Nut 40 flächig anliegen, wodurch ein Kraftschluss zwischen der Feder 30 und der Nut 40 bewirkt ist zum drehsicheren Fixieren der Aufnahmeeinheiten 10, 20 in der beim Überführen in die Klemmstellung vorliegenden Winkelstellung.

Die Stangenverbindereinrichtung 1 weist eine Rastiereinheit 90 zum Wiederauffinden einer einstellbaren Sollwinkelstellung auf. Durch die Rastiereinheit 90 ist es möglich, die Sollwinkelstellung, wie sie in der Figur 1 gezeigt ist, in einfacher Art und Weise wiederzufinden, beispielsweise um bei einer zusammengeklappten Halteanordnung schnell und einfach wieder die Sollwinkelstellung wiederzufinden, um die korrekte Position für das Endgerät 5 bezüglich des Rollstuhls 80 einzurichten.

Die Rastiereinheit 90 weist Komponenten auf, die in der ersten Aufnahmeeinheit 10 gelagert sind und weitere Komponenten auf, die in der zweiten Aufnahmeeinheit 20 gelagert sind.

Die Rastiereinheit 90 weist ein in der ersten Aufnahmeeinheit 10 gelagertes Rastelement 92 auf. Bei dem Rastelement 92 handelt es sich vorliegend um einen Rastpin. Das Rastelement 92 weist eine gefaste und endseitig abgeflachte Rastspitze mit einem Öffnungswinkel W1 von vorliegend 60° auf. Das Rastelement 92 ist radial versetzt zu der Drehachse A1 in der ersten Aufnahmeeinheit 10 axial verschiebbar gelagert. Dabei ist das Rastelement 92 über ein als Schraubendruckfeder ausgebildetes Federkraftelement 98 in Richtung der zweiten Aufnahmeeinheit 20 federkraftbeaufschlagt. Ein Endabschnitt des Rastelements 92 steht auf einer der zweiten Aufnahmeeinheit 20 abgewandten Stirnfläche der ersten Aufnahmeeinheit 10 hervor und ist mittels eines Wellensicherungsrings 99 in der ersten Aufnahmeeinheit 10 verliersicher gelagert.

In der zweiten Aufnahmeeinheit 20 ist ein Gegenelement 91 mit einer als Durchgangsloch ausgebildeten Raststruktur 93 gelagert. Das Gegenelement 91 ist ringförmig ausgebildet und die Raststruktur 93 ist radial versetzt zu der Drehachse A1 ausgebildet. Die Raststruktur 93 ist dazu eingerichtet, mit dem Rastelement 92 rastierend zusammenzuwirken, derart, dass bei einem Verdrehen der ersten Aufnahmeeinheit 10 und der zweiten Aufnahmeeinheit 20 zueinander um die Drehachse A1 bei Erreichen der Sollwinkelstellung das Rastelement 92 mit der Raststruktur 93 des Gegenelements 91 rastierend zusammenwirkt. Befinden sich die Aufnahmeeinheiten 10, 20 beispielsweise in der in der Figur 2 gezeigten Ausgangslage, somit in der zusammengeklappt Stellung, befinden sich das Rastelement 92 und die Raststruktur 93 dementsprechend nicht in Eingriff. Sollen die Aufnahmeeinheiten 10, 20 nun in die Sollwinkelstellung überführt werden, werden die erste Aufnahmeeinheit 10 und die zweite Aufnahmeeinheit 20 in die Losstellung überführt und dann solange um die Drehachse A1 zueinander verdreht bis das Rastelement 92 hör- und spürbar in die Raststruktur 93 des Gegenelements 91 unter Krafteinwirkung des Federkraftelements 98 einrastet. Durch das rastierende Zusammenwirken des Rastelements 92 mit der Raststruktur 93 wird dem Verwender angezeigt, dass sich die beiden Aufnahmeeinheiten 10, 20 in der gewünschten Sollwinkelstellung befinden. Dadurch wird über die Rastiereinheit 90 das Überführen der Aufnahmeeinheiten 10, 20 in die Sollwinkelstellung erleichtert. Nach Erreichen der Sollwinkelstellung können dann die Aufnahmeeinheiten 10, 20 in die Klemmstellung überführt werden.

Die Rastiereinheit 90 ist darüber hinaus derart gestaltet, dass eine Verstellung der Sollwinkelstellung durch eine Veränderung der Winkellage der Raststruktur 93 bezüglich der zweiten Aufnahmeeinheit 20 möglich ist. Zu diesem Zweck kann das Gegenelement 91 von einem Arretierzustand, der in den Figuren 6A und 8A gezeigt ist, in einen Verstellzustand überführt werden, der in den Figuren 6B und 8B gezeigt ist.. Um ein Wiederauffinden der Sollwinkelstellung mittels der Rastiereinheit 90 zu ermöglichen, ist es notwendig, dass das Gegenelement 91 in der zweiten Aufnahmeeinheit 20 arretiert ist, derart, dass das Gegenelement 91 drehfest in der zweiten Aufnahmeeinheit 20 gelagert ist. Dieser Zustand entspricht dem Arretierzustand. Um ein Einstellen der Sollwinkelstellung zu ermöglichen, ist es hingegen notwendig, dass eine Veränderung der Winkellage der Raststruktur 93 in der zweiten Aufnahmeeinheit 20 ermöglicht ist. Zu diesem Zweck kann das Gegenelement 91 in den Verstellzustand überführt werden, wobei das Gegenelement 91 in dem Verstellzustand um die Drehachse A1 drehbar in der zweiten Aufnahmeeinheit 20 gelagert ist.

Um das Gegenelement 91 von dem Arretierzustand in den Verstellzustand zu überführen und umgekehrt, weist die Rastiereinheit 90 ein Verspannelement 94 auf. Das Gegenelement 91 ist auf dem Verspannelement 94 gelagert. Das Verspannelement 94 weist einen Verspannabschnitt 95 auf. Die zweite Aufnahmeeinheit 20 weist eine Anpressfläche 28 für das Gegenelement 91 auf. Das Gegenelement 91 ist zwischen dem Verspannabschnitt 95 und der Anpressfläche 28 angeordnet. Um das Gegenelement 91 in der zweiten Aufnahmeeinheit 20 zu arretieren, ist das Verspannelement 94 axial verschiebbar in der zweiten Aufnahmeeinheit 20 gelagert. Durch Anziehen des Verspannelements 94 in Richtung der Anpressfläche 28 wird das Gegenelement 91 in dem Arretierzustand, der in den Figuren 6A und 8A gezeigt ist, überführt. Vorliegend ist das Gegenelement 91 in dem Arretierzustand klemmend zwischen dem Verspannabschnitt 95 und der Anpressfläche 28 gehalten, derart, dass durch Kraftschluss bzw. Reibschluss zwischen dem Gegenelement 91 und dem Verspannabschnitt 95 sowie dem Kraftschluss bzw. Reibschluss zwischen dem Gegenelement 91 und der Anpressfläche 28 das Gegenelement 91 drehfest in der zweiten Aufnahmeeinheit 20 gehalten ist. Grundsätzlich ist das Gegenelement 91 auf dem Verspannelement 94 drehbar gelagert. Dementsprechend ist in dem Verstellzustand, der in den Figuren 6B und 8B gezeigt ist, in dem der Verspannabschnitt 95 weiter beabstandet von der Anpressfläche 28 ist als in dem Arretierzustand, das Gegenelement 91 mit axialem Spiel zwischen dem Verspannabschnitt 95 und der Anpressfläche 28 angeordnet und dadurch das Gegenelement 91 bezüglich der zweiten Aufnahmeeinheit 20 um die Drehachse A1 drehbar. In dem Verstellzustand können dementsprechend das Gegenelement 91 und somit die Raststruktur 93 hinsichtlich in der zweiten Aufnahmeeinheit 20 in ihrer Winkelstellung verändert werden.

In der in den Figuren gezeigten Ausführungsform weist der Verspannabschnitt 95 einen sich in der axialen Richtung verändernden Außendurchmesser auf, wobei der sich verändernden Außendurchmesser einen Außenkonus bildet, wobei das Gegenelement 91 einen zu dem Außenkonus korrespondierenden Innenkonus aufweist. Durch die konische Gestaltung des Verspannabschnitts 95 und den Innenkonus des Gegenelements 91 ist eine besonders hohe axiale Kraftaufnahme ermöglicht.

Das Anziehen des Verspannelements 94 erfolgt durch Anziehen von Verspannschrauben 102. Die Verspannschrauben 102 durchsetzen die zweite Aufnahmeeinheit 20 in der axialen Richtung und stützen sich mit ihrem Schraubenköpfen auf einer der ersten Aufnahmeeinheit 10 abgewandten Seite an der zweiten Aufnahmeeinheit 20 ab. Die Verspannschrauben 102 sind in Gewindeabschnitten 97 eines Montageelement 96 eingeschraubt, wobei das Montageelement 96 mit dem Verspannelement 94 verbunden ist, nämlich mit diesem verschweißt ist. Durch Anziehen der Verspannschrauben 102 wird das Montageelement 96 und somit das Verspannelement 94 in die zweite Aufnahmeeinheit 20 hineingezogen, wodurch der Verspannabschnitt 95 das Gegenelement 91 gegen die Anpressfläche 28 zieht.

Um die Sollwinkelstellung zu verändern bzw. einzustellen kann wie folgt vorgegangen werden:
Zunächst werden die Verspannschrauben 102 gelöst, um das Gegenelement 91 aus dem Arretierzustand, in dem das Gegenelement 91 kraftschlüssig zwischen der Anpressfläche 28 und dem Verspannabschnitt 95 gehalten ist, in den Verstellzustand, in dem das Gegenelement 91 frei um die Drehachse A1 in der zweiten Aufnahmeeinheit 20 drehbar ist, zu überführen. Anschließend werden die erste Aufnahmeeinheit 10 und die zweite Aufnahmeeinheit 20 von der Klemmstellung in die Losstellung überführt durch Betätigen der Betätigungseinrichtung 60, nämlich durch Herausdrehen bzw. Lösen des Achselements 61 aus der zweiten Aufnahmeeinheit 20. Der dann vorliegende Zustand der Stangenverbindereinrichtung 1, nämlich Gegenelement 91 in dem Verstellzustand und erste Aufnahmeeinheit 10 und zweite Aufnahmeeinheit 20 in der Losstellung, ist in den Figuren 6B und 8B gezeigt. Sowohl die Verspannschrauben 102 als auch das Achselement 61 werden dabei nicht vollständig herausgeschraubt, sondern nur soweit, dass ein Verdrehen des Gegenelements 91 in der zweiten Aufnahmeeinheit 20 und ein Verdrehen der Aufnahmeeinheiten 10, 20 zueinander möglich ist. Aufgrund der Federkraft des Federkraftelements 98 bleibt das Rastelement 92 mit seiner gefasten Rastspitze in der als Durchgangsöffnung ausgebildeten Raststruktur 93 des Gegenelements 91 eingerastet. Dadurch nimmt das Rastelement 92 bei einem Verdrehen der ersten Aufnahmeeinheit 10 und der zweiten Aufnahmeeinheit 20 zueinander um die Drehachse A1 das Gegenelement 91 mit, sodass die Winkellage der Raststruktur 93 in der zweiten Aufnahmeeinheit 20 zu der aktuell vorliegenden Winkelstellung der beiden Aufnahmeeinheiten 10, 20 zueinander korrespondiert. Durch Anziehen der Verspannschrauben 102 wird dann das Gegenelement 91 in der aktuell eingestellten bzw. vorliegenden Winkelstellung arretiert, um dadurch die Sollwinkelstellung festzulegen. Ferner werden durch Anziehen des Achselements 61 die Aufnahmeeinheiten 10, 20 drehfest zueinander fixiert. Der dann vorliegende Zustand der Stangenverbindereinrichtung 1, nämlich Gegenelement 91 in dem Arretierzustand und erste Aufnahmeeinheit 10 und zweite Aufnahmeeinheit 20 in der Klemmstellung, ist in den Figuren 6A und 8A gezeigt.

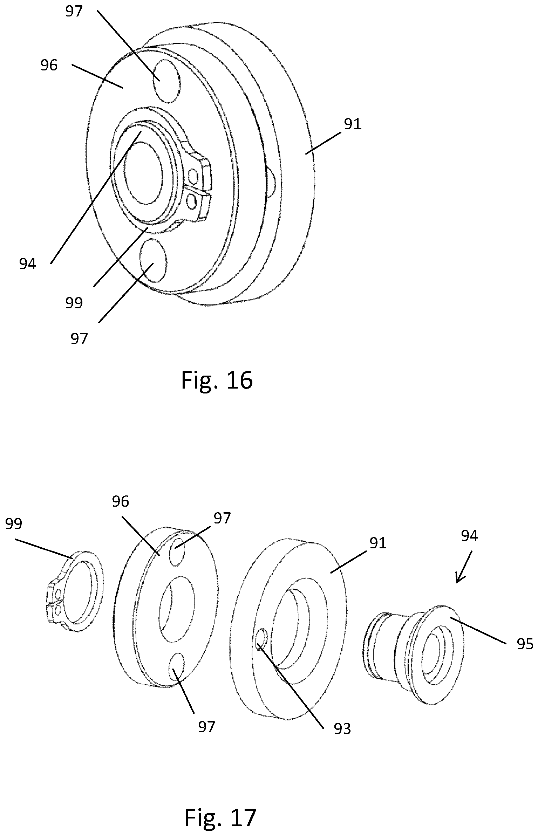

Die Figuren 16 und 17 zeigen die in der zweiten Aufnahmeeinheit 20 gelagerten Komponenten einer Rastiereinheit 90 gemäß einer weiteren Ausführungsform.

Diese Ausführungsform unterscheidet sich von der vorbeschriebenen Ausführungsform im Wesentlichen durch die Gestaltung des Verspannelements 94 und des Montageelements 96. Bei der in den Figuren 16 und 17 gezeigten Ausführungsform ist das Verspannelement 94 nicht drehfest mit dem Montageelement 96 verbunden, sondern zu diesem lediglich axial gesichert, nämlich über einen Wellensicherungsring 99. Konkret weist das Verspannelement 94 einen sich an den Verspannabschnitt 95 anschließenden Schaftabschnitt auf, wobei der Schaftabschnitt das ringförmige Gegenelement 91 und das ringförmig ausgebildete Montageelement 96 durchsetzt, wobei das Gegenelement 91 und das Montageelement 96 über den an dem Schaftabschnitt befestigten Wellensicherungsring 99 axial an dem Verspannelement 94 gesichert sind.

### Bezugszeichenliste

- 1: Stangenverbindereinrichtung
- 2: erstes Stange
- 3: zweites Stange
- 4: Verbindungsrohr
- 5: Endgerät
- 10: erste Aufnahmeeinheit
- 11: erste Stangenaufnahme
- 12: erste Reibfläche
- 20: zweite Aufnahmeeinheit
- 21: zweite Stangenaufnahme
- 22: zweite Reibfläche
- 23: Gegengewindeabschnitt
- 30: Feder
- 40: Nut
- 60: Betätigungseinrichtung
- 61: Achselement
- 62: Betätigungshebel
- 63: Gewindeabschnitt
- 80: Rollstuhl
- 83: Endgerätehalterung
- 86: Rahmenklemme
- 87: Schwenkgelenk
- 88: Rastscheibe
- 90: Rastiereinheit
- 91: Gegenelement
- 92: Rastelement
- 93: Raststruktur
- 94: Verspannelement
- 95: Verspannabschnitt
- 96: Montageelement
- 97: Gewindeabschnitt
- 98: Federkraftelement
- 99: Wellensicherungsring
- 101: Klemmschraube
- 102: Verspannschraube

- A1: Drehachse
- W1: Öffnungswinkel

## Patentansprüche

1. Stangenverbindereinrichtung (1) zum variablen winkelstabilen Verbinden von einer ersten Stange (2) und einer zweiten Stange (3) eines Gestänges miteinander mit einer Rastiereinheit (90) zum Wiederauffinden einer einstellbaren Sollwinkelstellung, wobei die Stangenverbindereinrichtung (1) aufweist:
- eine erste Aufnahmeeinheit (10), wobei die erste Aufnahmeeinheit (10) eine erste Stangenaufnahme (11) für die erste Stange (2) aufweist,
- eine zweite Aufnahmeeinheit (20), wobei die zweite Aufnahmeeinheit (20) eine zweite Stangenaufnahme (21) für die zweite Stange (3) aufweist,
wobei die erste Aufnahmeeinheit (10) und die zweite Aufnahmeeinheit (20) miteinander gekoppelt und von einer Losstellung in eine Klemmstellung überführbar sind, wobei die Aufnahmeeinheiten (10, 20) in der Losstellung um eine Drehachse (A1) zueinander drehbar sind zum Variieren eines Winkels der Aufnahmeeinheiten (10, 20) zueinander, wobei die Aufnahmeeinheiten (10, 20) in der Klemmstellung drehsicher fixiert sind, wobei die Rastiereinheit (90) ein in der ersten Aufnahmeeinheit (10) gelagertes Rastelement (92) und ein in der zweiten Aufnahmeeinheit (20) gelagertes Gegenelement (91) mit einer Raststruktur (93) für das Rastelement (92) aufweist, wobei das Rastelement (92) über ein Federkraftelement (98) in Richtung des Gegenelements (91) federkraftbeaufschlagt ist, wobei bei einem Verdrehen der ersten Aufnahmeeinheit (10) und der zweiten Aufnahmeeinheit (20) zueinander um die Drehachse (A1) in der Sollwinkelstellung das Rastelement (92) mit der Raststruktur (93) des Gegenelements (91) rastierend zusammenwirkt, wobei das Gegenelement (91) von einem Arretierzustand in einen Verstellzustand überführbar ist, wobei das Gegenelement (91) in dem Verstellzustand um die Drehachse (A1) drehbar in der zweiten Aufnahmeeinheit (20) gelagert ist zum Einstellen der Sollwinkelstellung durch Verändern einer Winkellage der Raststruktur (93) in der zweiten Aufnahmeeinheit (20), wobei das Gegenelement (91) in dem Arretierzustand drehfest in der zweiten Aufnahmeeinheit (20) gelagert ist zum Arretieren der eingestellten Sollwinkelstellung.

2. Stangenverbindereinrichtung (1) nach Anspruch 1, wobei die Rastiereinheit (90) ein Verspannelement (94) aufweist, wobei das Verspannelement (94) einen Verspannabschnitt (95) aufweist, wobei die zweite Aufnahmeeinheit (20) eine Anpressfläche (28) für das Gegenelement (91) aufweist, wobei das Verspannelement (94) axial verschiebbar in der zweiten Aufnahmeeinheit (20) gelagert ist, wobei durch ein axiales Verschieben des Verspannelements (94) das Gegenelement (91) von dem Verstellzustand in den Arretierzustand überführbar ist und umgekehrt, wobei in dem Arretierzustand das Gegenelement (91) klemmend zwischen dem Verspannabschnitt (95) und der Anpressfläche (28) und durch Kraftschluss mit dem Verspannabschnitt (95) und mit der Anspressfläche (28) drehfest in der zweiten Aufnahmeeinheit (20) gehalten ist und in dem Verstellzustand das Gegenelement (91) bezüglich der zweiten Aufnahmeeinheit (20) um die Drehachse (A1) drehbar ist.

3. Stangenverbindereinrichtung (1) nach Anspruch 2, wobei der Verspannabschnitt (95) einen sich verändernden Außendurchmesser aufweist, der einen Außenkonus bildet, und wobei das Gegenelement (91) einen sich verändernden Innendurchmesser aufweist, der einen zu dem Außenkonus korrespondierenden Innenkonus bildet.

4. Stangenverbindereinrichtung (1) nach Anspruch 2 oder Anspruch 3, wobei das Verspannelement (94) an einem Montageelement (96) befestigt ist, wobei das Montageelement (96) zumindest einen Gewindeabschnitt (97) aufweist, wobei ein Schraubelement mit dem Gewindeabschnitt (97) verschraubt ist, wobei ein drehendes Anziehen des Schraubelements zu einem axialen Verschieben des Verspannabschnitts (95) in Richtung der Anpressfläche (28) führt.

5. Stangenverbindereinrichtung (1) nach Anspruch 4, wobei das Schraubelement als Schraube mit einem Kopfabschnitt ausgebildet ist und sich das Schraubelement beim Anziehen mit dem Kopfabschnitt auf einer dem Verspannabschnitt (95) abgewandten Seite der zweiten Aufnahmeeinheit (20) an der zweiten Aufnahmeeinheit (20) abstützt.

6. Stangenverbindereinrichtung (1) nach einem der Ansprüche 2 bis 5, wobei das Verspannelement (94) drehfest in der zweiten Aufnahmeeinheit (20) gelagert ist.

7. Stangenverbindereinrichtung (1) nach einem der Ansprüche 1 bis 6, wobei das Gegenelement (91) ringförmig ausgebildet ist.

8. Stangenverbindereinrichtung (1) nach einem der Ansprüche 1 bis 7, wobei in dem Verstellzustand das Rastelement (92) mit der Raststruktur (93) des Gegenelements (91) derart zusammenwirkt, dass bei einem Verdrehen der ersten Aufnahmeeinheit (10) und der zweiten Aufnahmeeinheit (20) zueinander um die Drehachse (A1) das Gegenelement (91) durch das Rastelement (92) mitgenommen wird.

9. Stangenverbindereinrichtung (1) nach einem der Ansprüche 1 bis 8, wobei die Raststruktur (93) als Rücksprung oder Durchgangsloch ausgebildet ist.

10. Stangenverbindereinrichtung (1) nach einem der Ansprüche 1 bis 9, wobei das Rastelement (92) und die Raststruktur (93) derart gestaltet sind, dass in dem Arretierzustand ein Verdrehen der ersten Aufnahmeeinheit (10) und der zweiten Aufnahmeeinheit (20) zueinander aus der Sollwinkelstellung heraus unter Überwindung eines durch das rastierende Zusammenwirken des Rastelements (92) mit der Raststruktur (93) bedingten Rastwiderstands möglich ist.

11. Stangenverbindereinrichtung (1) nach einem der Ansprüche 1 bis 10, wobei das Rastelement (92) eine mit der Raststruktur (93) zusammenwirkende Rastspitze aufweist, wobei die Rastspitze einen Öffnungswinkel (W1) von 40° bis 90°, vorzugsweise von 45° bis 65°, besonders bevorzugt von 50° bis 60°, aufweist.

12. Stangenverbindereinrichtung (1) nach einem der Ansprüche 1 bis 11, wobei die Raststruktur (93) auf einer der ersten Aufnahmeeinheit (10) zugewandten Stirnfläche des Gegenelements (91) ausgebildet ist.

13. Stangenverbindereinrichtung (1) nach einem der Ansprüche 1 bis 12, wobei das Rastelement (92) einen dem Gegenelement (91) abgewandten Endabschnitt aufweist, wobei das Endabschnitt die erste Aufnahmeeinheit (10) durchsetzt.

14. Stangenverbindereinrichtung (1) nach einem der Ansprüche 1 bis 13, wobei die erste Aufnahmeeinheit (10) eine erste Reibfläche (12) aufweist und die zweite Aufnahmeeinheit (20) eine zweite Reibfläche (22) aufweist, wobei in der Klemmstellung die erste Aufnahmeeinheit (10) und die zweite Aufnahmeeinheit (20) entlang der Drehachse (A1) aneinander gepresst sind, derart, dass die Reibflächen (12, 22) kraftschlüssig zusammenwirken zum drehsicheren Fixieren der Aufnahmeeinheiten (10, 20).

15. Verfahren zum Halten eines Endgeräts (5) an einem Rollstuhl (80), wobei zum Halten des Endgeräts (5) ein Gestänge an dem Rollstuhl (80) befestigt wird, wobei das Gestänge zumindest eine erste Stange (2) und eine zweite Stange (3) aufweist, wobei die erste Stange (2) und die zweite Stange (3) über eine Stangenverbindereinrichtung (1) nach einem der vorigen Ansprüche miteinander verbunden sind.
